# EUROPEAN PATENT SPECIFICATION

(11) **EP 4 043 412 B1**
(45) Date of publication and mention of the grant of the patent: **03.09.2025**
(21) Application number: 21382123.4
(22) Date of filing: 16.02.2021
(51) Int. Cl.: C03B 33/03, B65G 49/06

(54) **GLASS PROCESSING TABLE FOR PROCESSING GLASS**
GLASVERARBEITUNGSTISCH ZUM BEARBEITEN VON GLAS
TABLE DE TRAITEMENT DE VERRE POUR LE TRAITEMENT DU VERRE

(43) Date of publication of application: 17.08.2022
(73) Proprietor: Tur & Development SL, 44415 Teruel (ES)
(72) Inventor: Tomás Martin, Miguel, ES-44415 Rubielos De Mora Teruel (ES)
(74) Representative: Nederlandsch Octrooibureau

(56) References cited:
- EP-A1- 1 975 131
- EP-A1- 2 845 840
- EP-A1- 3 184 473
- EP-A1- 3 257 794
- EP-B1- 1 752 425
- EP-B1- 2 845 840
- DE-U1- 202008 010 824
- FR-A1- 2 545 815
- US-A1- 2005 279 199
- US-B2- 7 472 636

## Description

### SUBJECT MATTER OF THE INVENTION

The present invention relates to a glass processing table, according to claim 1, and method for processing glass comprising a processing system comprising a bridge extending in a direction from one side of the table to the opposed side of the table, according to claim 15.

### BACKGROUND OF THE INVENTION

Glass processing machines are characterised by incorporating systems for loading the glass on their surface. There are various loading systems: belts, table tilting, arms, etc. For instance, in loading by tilting of the cutting table, the table rises until it is vertical (perpendicular to the floor) in order to load the glass. In this position the glass can be loaded by clamps, suction cups or an overhead loader that brings it near the surface of the table. When the glass is resting on the load support points that protrude from the table surface, the table returns to the horizontal position. Another loading system uses tilting arms. In this system the glass is loaded using arms provided on the table surface that tilt to a vertical position. The plate is then placed on the load support points using clamps, suction cups or manually. When the glass is positioned in the arms, the arms are lowered again to the surface of the table.

In glass loading systems using belts, a set of belts is provided on the table that allow moving the glass along the table surface to the cutting position. Machines with belts generally work together with an overhead loader that places the plate on a tilting table placed before the cutting table. This table has rollers that move the glass forward until meeting the belts of the cutting machine.

FR 2 545 815 A1 discloses a tilting cutting table comprising a bridge extending through the long side of the table, wherein the table can tilt using as a fulcrum the shortest side of the table such that a glass standing on its longest edge can enter the table from the shortest side of the table.

### DESCRIPTION OF THE INVENTION

Placing and processing glass plates on the table in a position wherein the longest edge of the glass plate (that is, the edge extending the greatest distance in a direction) is perpendicular to the processing bridge imposes certain constraints in the design of the installation line as a whole which sometimes does not match the available space or the flow of glass within the installation. Usually glass plates are transported and stored standing on its longest edge due to stability reasons. This is especially true for glass plates which longest edge exceeds a length of 4.5 meters. 4.5 meters is also the maximum height that can be transported on the road with the standard dimensions of the trucks Due to the way the glass plates are stored, they are also usually loaded on the table through one of the sides of the table that extends in a direction orthogonal to the direction on which the bridge extends on the table. This imposes restrictions in the arrangement of the line and of the whole installation. In addition, if the table comprises a mobile processing bridge mounted on guides arranged on the sides of the table, these guides interfere with the installation of tilting loading arms on the sides where the guides are, which are also the sides from where the glass plates are loaded on the table. An alternative solution would be to rotate the glass plate before loading it on the table. But this also presents problems such as slowing the processing process, interfering with the whole line and needing an extra process step to rotate said glass plate.

In order to reduce or even eliminate all or some of the aforementioned drawbacks, a table for processing glass plates, wherein the table comprises a surface for supporting a glass plate in horizontal position, is disclosed. In this description, the terms "horizontal" and "vertical" will be used to indicate respectively: a direction substantially parallel to the position of the table on the ground and a direction substantially perpendicular to the position of the table on the ground.

The table comprises a first pair of opposed sides extending in a first direction, a second pair of opposed sides extending in a second direction orthogonal to the first direction, a surface for supporting a glass plate in horizontal position wherein the surface extends between the first and the second pair of opposed sides, a processing system for processing the glass plate, wherein the processing system comprises an bridge and a mobile processing head, where the mobile processing head is mounted on the bridge, wherein the bridge is arranged above the surface extending longitudinally in the second direction and wherein the mobile processing head is arranged to move along the bridge, wherein the second pair of opposed sides of the table extends a distance of more than 4.5 meters in the second direction such that glass plates having a edge longer than 4.5 meters can be placed for being processed on the table with said edge extending in the first direction.

By processing the glass plate on the table in a position wherein said longest edge extends parallel to the direction on which the bridge extends on the table, an improved glass processing table is provided because operators can more efficiently carry out other steps after the processing performed by the table due to the orientation of the glass plate. It also increases compatibility with loading systems while avoiding the need of rotating the glass plates which are stored standing up on their longest edge. For instance, it allows using an external loading system that place glass-filled trestles in front of the cutting line or those that deliver the glass plate directly to a platform or tilting arms because it. **In** this way, it avoids installation of intermediate machines, thereby reducing costs. As it has been said, the glass plates are usually stored in the storage places vertically standing over their longest edge because it is more comfortable to handle them and because glass plates are also transported on the road in that position as 4.5 meters is the maximum height that can be transported on the road with the standard dimensions of the trucks. This limitation forces that the glass plates need to be transported in a vertical position wherein the edge of the glass plate having the greatest length is arranged parallel to the ground. By allowing that glass plates with its longest edge having a length greater than 4.5 meters (such as jumbo glass sheets) can be placed and processed on the table in a position wherein the glass plate enters from the long edge, the processing table according to the invention can be fed without the installation having to be set up in such a way that a first machine has to rotate the glass plate from a vertical position to an horizontal one. This also provides a faster machine because the longest dimension of the glass plate is processed by the mobile processing head. Moving the head processing head is faster that moving the glass plate or than moving the bridge, as the processing head is lighter (has less mass) compared to the whole bridge or to some glass plates.

The bridge is a mobile bridge arranged to move on the table in the first direction. This provides a very efficient table as the c movement of the bridge on the table in the first direction combined with the movement of the processing head along the bridge in the second direction allows to process a glass plate in a very efficient and fast way. The bridge may be mounted on guides located on the sides of the table which extend in a direction orthogonal to the direction on which the bridge extends on the table. **In** this way, the bridge can move backward and forward guided by the guides.

The table further comprises a loading system arranged to receive the glass plate from outside the table and to place the glass plate on the surface, wherein the loading system is arranged at one of the sides of the second pair of sides and comprises at least one tilting arm for loading the glass plate wherein the tilting arm is arranged to tilt between a first position wherein the tilting arm forms an angle with the surface and a second position wherein the tilting arm extends along the surface such that the loading system can load and move the glass plate between the first and the second positions.

The loading system comprises at least one tilting arm for loading the glass plate wherein the tilting arm is arranged to tilt between a first position wherein the tilting arm forms an angle with the surface and a second position wherein the tilting arm extends along the surface such that the loading system can load and move the glass plate between the first and the second positions. In this way, the table can be autonomous in the positioning of the glass plate in a horizontal position without requiring an additional tilting table, and can automatically evacuate the glass plate at the same time as the next glass plate is placed in the cutting area. The loading system can comprise any number of arms. The arms can tilt independently or in a coordinated manner. For example, some of the arms can remain horizontal while the rest tilt. For example, two arms can tilt and not the rest, or one arm can remain horizontal and the rest can tilt to receive a glass plate. This is an efficient way to load the glass plates in the table loading area. The number of arms can depend on the dimensions of the larger glass plate than the loading system is able to load. Specifically, the number of arms can depend on the dimensions of the largest glass plate the loading system is able to load. The loading system can comprise any other element that allows placing a plate in a horizontal position on the loading area. For example, the loading system can comprise rollers capable of receiving a glass plate in the horizontal position and moving it to the loading area. The loading system can also be configured to receive the glass plate from an external overhead loader or from any other type of loader or device. The loading system can be configured to receive the glass plate in any manner that does not interfere with the processing system. That is, such that simultaneous loading and processing of glass plates is possible in the system. The surface of the table can comprise longitudinal grooves starting at the end of the table from where the loading is performed and coinciding with the positions of the arms, such that the arms can tilt to a horizontal position in which they are concealed under the surface of the table. Instead of comprising tilting arms, the loading system may comprise belts arranged longitudinally extending on the surface of the table such that the belt can receive a glass plate from outside of the table and move the glass plate in the first direction on the surface of the table.

The tilting arm comprises a suction cup such that, when the tilting arm is in the first position to receive the glass, the suction cup is arranged to adhere to the glass plate, and when the tiling arm moves from the first position to the second position wherein the tiling arm is in a horizontal position, the adhered suction cup pulls from the glass plate thereby moving and placing the glass plate horizontally on the surface of the table.

This facilitates loading of glass plates from outside. The tilting arm can comprise any number of suction cups appropriate for holding a glass plate. The tilting arm can also comprise removable support points on the lower part of the arm to load or unload a glass plate. For example, the removable support points can be used to load or unload a glass plate that cannot be gripped by the suction cups due to its size. The removable support points can also be used to load or unload a glass plate manually. The arm can comprise any other support system that allows holding the glass plate until it is horizontal on the loading area. The table can comprise on its surface openings located at the grooves in which the arms are concealed and coinciding with the position of the suction cups when the arm is in a horizontal position, such that the arms and suction cups are concealed under the table surface.

The glass plate loading system can comprise a hydraulic group for tilting the tilting arm between the first position and the second position, where in the second position the arm is concealed under the surface of the table. The hydraulic group can be located in any part of the system that allows it to perform its function. The loading system can comprise any other type of system. The loading system can be actuated in any other manner that allows performing the tilting motion. The loading system can also comprise one or several cylinders placed on any of the arms and the hydraulic group can exert its force on the cylinders to tilt the arms. The cylinders can be located in any other position. For example, the cylinders can be connected to a mechanical system that is in turn connected to the arms such that the mechanical system, due to the action of the cylinders, can make the arms tilt. Instead of the cylinders, any other similar element can be used. The loading system can comprise any other mechanical system that allows actuating the arms.

The table comprises a transport system for moving the glass plate forward and/or backwards on the table in the first direction wherein the transport system comprises a convey belt or wheels arranged longitudinally extending on the surface of the table in the first direction and/or the transport system comprises a clamp, a suction cup or a block arranged on the bridge to pull or push the glass plate towards or away from the bridge.

This is an efficient way to transfer the glass plates from the loading area to the processing area. The transport system can comprise any number of belts. Alternatively, the transport system may replace the loading system such that the transport system is arranged to receive a glass plate from the outside of the table and to placed it on the surface of the table. The number of belts can depend on the dimensions of the largest glass plate that the loading system is able to load. For example, the number of belts in the system can depend on the dimensions of the largest glass plate that the loading system is able to load. The transportation system can be implemented in any other way that allows transporting a glass plate from the loading area to the processing area such that it does not interfere with the loading system. The belt can be placed such that it does not interfere with the loading system. For example if the loading system is composed of arms, the arms and belts can be placed on the table such that both are operative at the same time. For example, the belts can be located on the table at positions that do not coincide with the positions at which the arms are joined to the table. In this way the arms can tilt without interfering with the belt.

The belt can comprise mechanical means to raise and lower the belt that moves between a position in which the belt is concealed under the surface of the table and one in which the belt is above the surface of the table. For example, the transportation system can comprise one or several pneumatic cylinders that move the belt up or down. The transport system can comprise any other type of cylinder. Instead of raising or lowering the belts, the surface of the table may move up or down to conceal or reveal the belts respectively. The transport system can comprise any other type of system that allows the belt to rise or descend with respect to the plane containing the belts. The surface of the table can comprise longitudinal grooves through which the belts can rise onto the surface of the table to contact a glass plate and transport it, and falling beneath the surface of the table so that the glass plate is in contact with the surface of the table. The grooves can be located in positions where the arms are not present. In this way, the loading and transportation systems can coexist in the table and provide their functionality, allowing simultaneous loading and processing of glass plates.

The glass plate transportation system can comprise a plurality of belts and a joining system to join all the belts such that when the mechanical means exert a force on the joining system the plurality of belts rises or falls together. For example, the belts can comprise a plate or any number of plates that keeps them together such that by exerting a force on the plates the belts rise or descend together. The belts can comprise any other joining system that allows them to perform their function. The plate can be placed on the bottom part of the belts with respect to the surface of the table, such that when the belts are concealed inside the surface of the table and the arms tilt to the horizontal position in which they are also concealed in the surface of the table, the plate will not be interposed in the path of the arms.

The glass plate transport system can comprise a plurality of belts, a shaft crossing the plurality of belts and a motor that exerts its force on the shaft such that the plurality of belts move in a synchronised and simultaneous manner to transport a glass sheet from the loading area to the processing area. The motor can be located in any part of the system that allows it to perform its function. The transport system can comprise any other type of mechanical system that allows moving the belts. The shaft can be placed on the bottom part of the belts with respect to the surface of the table, such that when the belts are concealed inside the surface of the table and the arms tilt to the horizontal position in which they are also concealed in the surface of the table, the shaft will not be interposed in the path of the arms.

The belts and arms can be arranged in alternating positions on the surface of the table. The arms and belts can be placed in different positions on the surface of the table, such that operation of one of these will not interfere with the operation of the others, allowing the simultaneous loading and processing of glass plates on the surface of the table. The arms and belts can be distributed in any manner appropriate for their operation.

Instead of belts, the transport system may comprise wheels. The wheels may be arranged along longitudinal arms. For instance, each of the belts may be replaced by a longitudinal arm wherein each longitudinal arm may comprise several wheels distributed along the arm in the longitudinal direction such that a glass plate, when placed on the surface of the table, can be moved by activating the wheels. A motor can be used to activate rotational movement of the wheels such that the wheels, by rotating against the surface of the glass panel in the direction of the processing system, will cause the glass plate to displace towards the processing system.

The transport system may alternatively comprise clamps located in the upper bridge. In this way, the clamps may grab a glass plate located on the surface of the table and pull or push the glass plate towards or away the processing system. For instance, once the clamps have grabbed the glass plate, by moving the upper bridge towards or away from the glass plate, the clamps may pull or push the glass plate. Instead of clamps, the upper bridge may comprise one or more suction cups arranged to attach to the surface of the glass plate and to move it in the same way as it has been described in relation to the clamps. As another alternative, the upper bridge may comprise one or more blocks arranged to lie against the borders of the glass plate such that movement of the upper bridge causes the glass plate to move as well.

The table further comprises a fixed bridge arranged below the surface of the table wherein the fixed bridge extends in the second direction and parallel to the upper bridge and comprises another mobile processing head configured to move along the fixed bridge.

The tilting arm comprises a support arranged to hold at least a section of the glass plate such while the processing system processes another section of the glass plate or another glass plate. This improves the processing of the section of the glass plate that stays on the surface of the table. By holding a section of the glass plate in the tilting arm, the space on the surface left free can be used as extra space to process and manipulate the section staying on the surface. Each tilting arm may comprise one or more supports. The supports may be located along the arm such that, when the arm is extending along the surface of the table, the supports extend above the surface of the table. In this way, a edge of a glass plate that is on the table can rest against the support such that, when the tilting arms tilt to raise above the surface of the table, the glass plate is held by the supports on the tilting arms. The tilting arms may comprise grooves wherein the supports are arranged. The supports may be configured to move between a first position wherein the support is hidden within the groove and a second position wherein the support raises from the groove such that the support protrudes from the tilting arms.

The loading system comprises a device arranged to independently open or close at least one of the suction cups. In this way, when a glass plate with its longest edge having a length smaller than the maximum length that the suction cups can cover, one or more of the suction cups can be closed.

The loading system comprises a plurality of tilting arms wherein the plurality of tilting arms are arranged in a plurality of groups wherein the tilting arms that belong to a group of the plurality of groups are arranged to move in a synchronized way and independently of the tilting arms that belong to other groups of the plurality of groups. This allows that each of the plurality of groups can independently be used to load and place on the table a glass plate. In this way, it is possible, for instance to load and place on the table a plurality of glass plates wherein each glass plate is loaded and placed on the table by a different group of tilting arms. The loading system may comprise any number of groups and each group of arms may comprise any number of arms wherein each arm may comprise any number of suction cups that can be open and/or closed.

The surface comprises a plurality of reference positions and the loading system is arranged to receive and place a plurality of glass plates on the surface based on the plurality of reference positions, respectively. The plurality of reference positions may, in this way, define different areas on the surface of the table. The plurality of reference positions may, for instance, define a plurality of areas extending parallel to each other in the first direction orthogonal to the direction on which the bridge extends above the table. Each of the plurality of areas may comprise a rectangular or square shape defined by four reference positions wherein each of the reference positions corresponds with each of the corners of the rectangular/square shape. However, each area may be defined by any other number of reference positions and may have any other shape. Each group of arms may correspond to each of the plurality of areas such that each group is arranges to load and position a glass plate in a corresponding area. The areas may partially overlapped with each other. The areas may be physically marked on the surface of the table. The table may comprise a processing unit and the reference positions defining the different areas may be programed in the processing unit. In this way, the loading system may identified the first and the second areas

The surface of the table further comprises a buffer zone such that one or more glass plates can be placed horizontally in the buffer zone waiting to be transferred to the processing zone wherein the processing zone is defined by the area of the table wherein the mobile processing head is arranged to move. The table may comprise any number of buffer zones and processing zones and the buffer zones and processing zones may be defined by reference zones as it has been previously described.

The table further comprises other bridges. For instance, the table may comprise several upper bridges extending above the table parallel to each other and comprising each one a processing mobile head. Each of the bridges may be mobile such that it can move backward or forward in the first direction, or may be fixed and, in this last case, the table may comprise one or more transporting systems arranged to move the glass table towards or away from one to the upper bridges. Each of the upper bridges may process a glass place in a different area. The table may further comprise a lower bridge extending in the second direction below the table. The lower bridge may be a fix bridge. In this way, the table may process laminated glass plates.

The loading system further comprises a separating device arranged to separate the glass plate from a plurality of glass plates stored in an external glass plate storing device.

The table comprises a communication system arrange to send and/or receive control signals to and/or from other systems in the table and/or outside the table.

The upper bridge or any of the other bridges comprise a reinforcement structure to avoid structural deformation wherein the reinforcement structure comprises a bracing cable system or reinforcement pieces. The upper or any other bridge may comprise and elongated hollow structure extending in the first direction on the table wherein the bracing cable system may comprise one or more cables extending inside the hollow structure and attached at one or more points of said structure in order to create forces that increase the resistance of the structure. The bridges may further comprise external pieces of different metals attached of the outside or the inside of the structure. This allows to the bridge to extend more than 4.5 meters in the second direction as the reinforcement structures allow to decrease the probability of deformation of the bridge while keeping the weight of the bridge low.

Furthermore, a method to process glass plates in a table is provided, wherein the table comprises a first pair of opposed sides extending in a first direction, a second pair of opposed sides extending in a second direction orthogonal to the first direction, a surface for supporting a glass plate in horizontal position wherein the surface extends between the first and the second pair of opposed sides and a processing system for processing the glass plate, wherein the processing system comprises an upper bridge and a mobile processing head, where the mobile processing head is mounted on the upper bridge, wherein the upper bridge is arranged above the surface extending longitudinally in the second direction and wherein the mobile processing head is arranged to move along the upper bridge; wherein the second pair of opposed sides of the table extends a distance of more than 4.5 meters in the second direction; wherein the method comprises the steps of placing a glass plate having an edge longer than 4.5 meters with said edge extending in the first direction and processing, by the processing system, the glass plate.

### BRIEF DESCRIPTION OF THE DRAWINGS

To complete the description being made and in order to aid towards a better understanding of the features of the invention, the present specification is accompanied by a set of drawings forming an integral part of the invention, where for purposes of illustration and in a non-limiting manner the following is shown:
Figure 1A: Schematic view of a glass processing table comprising a processing system according to the invention.
Figure 1B: Schematic view of the glass processing table of Figure 1A comprising a loading system with arms and suction cups according to the invention.
Figure 2: Schematic view of the glass processing table of Figure 1B further comprising a transportation system using belts.
Figure 3: Schematic view of a glass processing table comprising an alternative loading system with arms and suction cups according to the invention.
Figure 4: Schematic view of the glass processing table of Figure 2 further comprising a second processing bridge.
Figures 5: Schematic view of a glass processing table comprising several processing areas.
Figures 6A-D: Schematic view of a bridge.

### DESCRIPTION OF THE PREFERRED EMBODIMENT

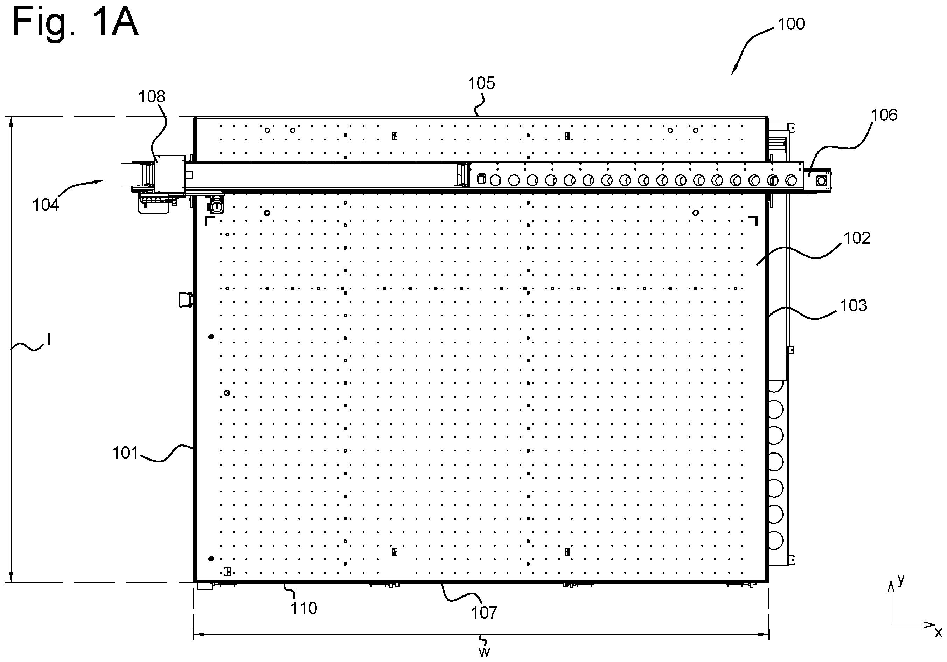

Figure 1A shows a schematic view of a glass processing table with a bridge. The term table used in the claims and the description is non-limiting and refers to any element that can provide the same functions. Specifically, the term table can refer to any surface that can support glass plates for loading and processing. Figure 1A shows a table (100) for loading and processing glass plates that comprises a first pair of opposed sides (101, 103) extending in a first direction y and a second pair of opposed sides (105, 107) extending in a second direction x orthogonal to the first direction y. The table (100) comprises further a surface (102) for supporting glass plates in a horizontal position wherein the surface (102) is surrounded by the first pair of opposed sides (101, 103) and the second pair of opposed sides (101, 103). The first pair of opposed sides (101, 103) extends in the first direction a first distance 1. The second pair of opposed sides (105, 107) extends in the second direction a second distance w wherein the second distance w is more than 4.5 meters. The first distance l may be less than the second distance w.

The table of Figure 1A comprises a processing system (104) configured to process a glass plate. The table of Figure 1A may comprise a control unit configured to control the processing system (104). The processing system comprises an upper bridge (106) arranged above the surface (102) and extending in the second direction x from one side (101) of the first pair of opposed sides (101, 103) to the other side (103) of the first pair of opposed sides (101, 103) such that the bridge (106). The upper bridge (106) comprises a mobile processing head (108) mounted on the upper bridge (106). The mobile processing head (108) is configured to move forward or backward in the second direction x along the upper bridge (106). This allows that glass plates having its longest edge extending in a direction more than 4.5 meters can be placed on the surface of the table such that said longest side extends in the second direction x parallel to the upper bridge (108). In this way, the movement of the mobile processing head in the second direction is used to process the longest edge of the glass. This is very efficient because the mobile processing head is light thereby allowing to move it fast. The mobile processing head (108) may comprise a scoring tool, an abrading tool and/or a cutting tool. The mobile processing head (108) may comprise any other kind of tool suitable for glass processing.

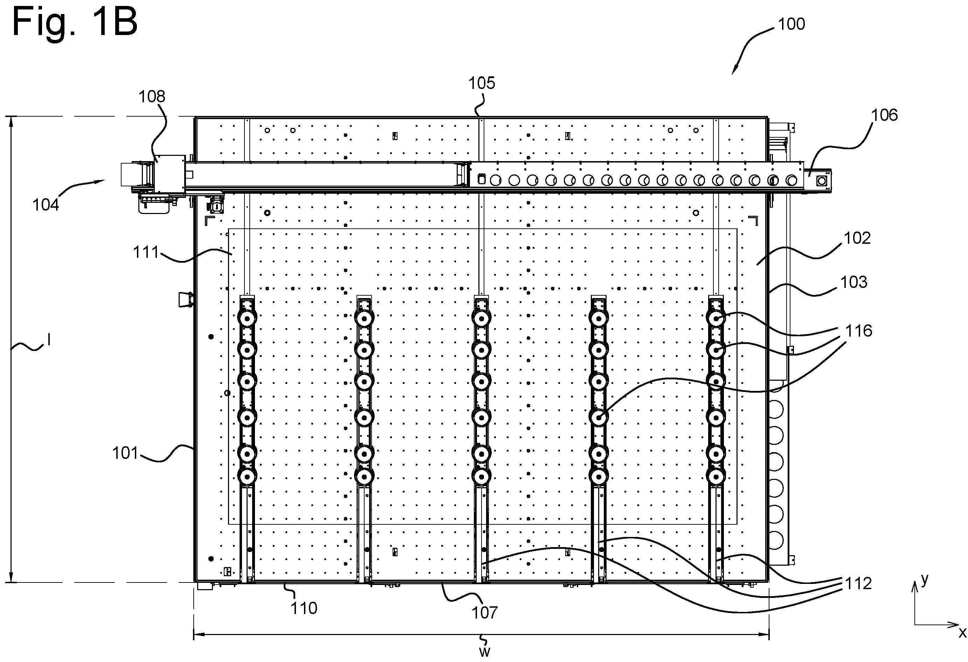

Figure 1B shows the table of Figure 1A further comprising a loading system (110) for loading glass plates. The loading system (110) for loading glass plates is able to receive a glass plate from outside the table and deposit the glass plate received in a horizontal position on the surface (102). The loading system (110) comprises five tilting arms (112) wherein the tilting arms (112) are configured to move or tilt between a first position wherein the tilting arms (112) form an angle with the surface (102) and a second position wherein the tilting arms (112) extend parallel to the surface (112) in the first direction y. An external loader (not shown) of glass plates may supply a glass plate to the glass plate loading system (110). The external loader may be a mobile rack that supplies a glass plate in a vertical or inclined position to the loading system (110) such that the tilting arms (112) receive it when the tilting arms are placed in a vertical position. The tilting arms (112) can be adhered to the glass plate by the suction cups (116). The tilting arms (112) can therefore tilt with the glass plate to a horizontal position and deposit the glass plate on surface of the table in this horizontal position.

The loading system (110) of Figure 1B comprises a bar or shaft (114) to which the tilting arms (112) are secured. The tilting arms (112) can be secured to the bar or shaft (114) by screws or any other means. The tilting arms (112) of the loading system (110) are configured to perform a tilting movement with respect to the bar or shaft (19) such that the tilting arms are raised above said bar or shaft. The loading system (110) of Figure 1B may comprise a hydraulic group (not shown in Figure 1B). The hydraulic group can actuate the tilting arms (112) of the loading system to make them tilt. The hydraulic group may be located at one of the ends of the loading system. The loading system (110) of Figure 1B may comprises two cylinders located at the tilting arms (12) of the ends to exert a force on these and thereby raise them. Each of the cylinders may be arranged on one of the tilting arms (112) of the ends. Each of the tilting arms (112) of the loading system (110) of Figure 1B comprises six suction cups (116) that will adhere to a glass plate and thereby hold it on the tilting arm (112). Each of the tilting arms may alternatively comprise any number of suction cups. Moreover, the number of suction cups (116) may be different in each tilting arm (112) and may be distributed in the tilting arm in any suitable way. The loading system (110) of Figure 1B may comprise a group (not shown in Figure 1B) connected to the suction cups (116) that creates a vacuum in the suction cups (116) when the tilting arms are vertical so that they adhere to the surface of a glass plate and grip it. Once the tilting arms (112) have finished loading a glass plate on the table and are in a horizontal position, the suction cups (116) can blow air to help the suction cups release from the surface of the glass plate. The tilting arms (112) may alternatively comprise any other system to load and hold the glass plate on the tilting arms.

The tilting arms (112) of the loading system (110) of Figure 1B may comprise a support (not shown in Figure 1B) that can be used to hold a glass plate on the tilting arms when the tilting arms are in a position forming an angle with the surface (102) of the table. This allows to hold one glass plate on the tilting arms while another glass plate is being processed on the surface of the table. In this way, the loading and processing of glass plates can be partly overlapped thereby saving time. The support may have an elongated shape and may be arranged to protrude from the tilting arm such that, when the tilting arm is the second position wherein the tilting arms (112) extend parallel to the surface (112), the support horizontally extends from the arm. In this way, when the tilting arm is in the first position wherein the tilting arms (112) form an angle with the surface (102), a glass plate can be loaded on the arm such that the support of the arm is against the lowest edge of the glass which extends horizontally parallel to the ground. In this way, the support can hold the glass plate in that position and allow processing of a second glass plate located on the surface of the table. The support may be movably arranged in a cavity on the tilting arm such that can move to a hidden position inside said cavity when not in used.

The table of Figures 1A or 1B may further comprise a system (not shown) for evacuating glass plates that evacuates a glass plate out of the table after passing through the processing table.

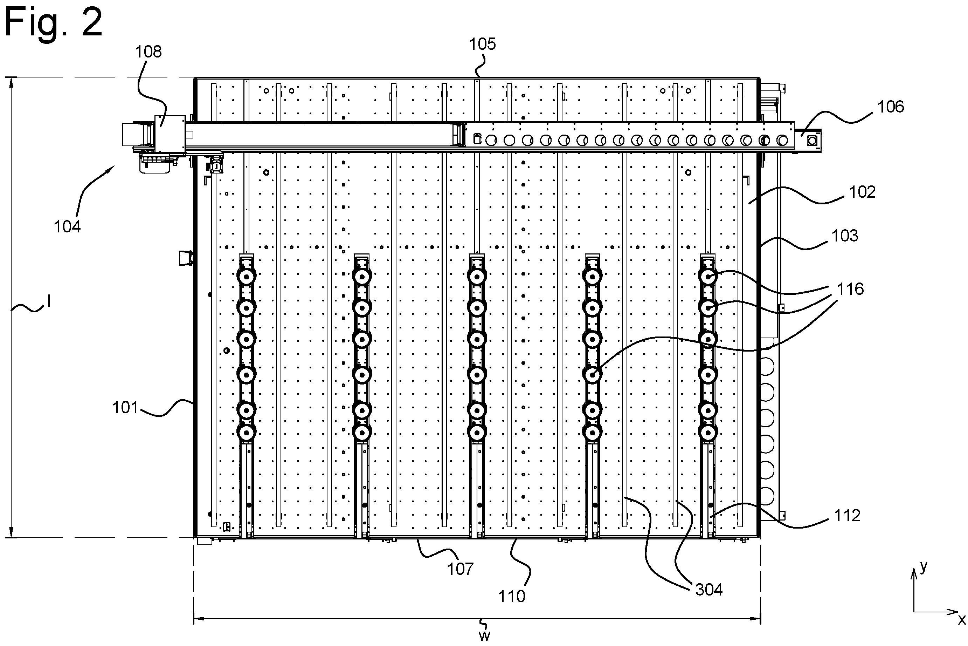

Figure 2 shows a schematic view of a glass processing table comprising a processing system (104) and a loading system (110) as the ones described in relation to Figures 1A and 1B. In Figure 2 the same reference signs have been used as in Figures 1A and 1B for identical elements.

The table of Figure 2 further comprises a transport system for moving a glass plate in the longitudinal direction of the table (100).

The transport system of Figure 2 comprises a plurality of convey belts (304). The number of convey belts in the system is ten. However, the transport system may comprise any suitable number of convey belts.

The convey belts (304) of the transport system of Figure 2 may comprise a plate (not shown) that keeps all the convey belts (304) together. Pneumatic cylinders (not shown) or any other system used in its place can exert their action on the plates or on any other system that connects all the convey belts, such that when the plate or the system joining the convey belts is raised, all the convey belts rise simultaneously. Each plate can be raised using two cylinders. The cylinders may be located at the ends of the plates.

The transport system of Figure 2 may comprise a hollow-shaft geared motor to move the convey belts (304). The transport system of Figure 2 may comprise a shaft that crosses all the convey belts (304).

The hollow-shaft geared motor turns the shaft thereby moving the convey belts (304). Thus, the movement of all the convey belts (304) is simultaneous and fully synchronised.

Alternatively, the convey belts of the transport system of Figure 2 may be divided in a plurality of groups wherein each group comprises one or more of the convey belts (304) wherein each group comprises neighbouring convey belts and the convey belts in one group are not part of any other group. The transport system of Figure 2 may then comprise a plurality of plates such that each plate keeps the convey belts of one group together. Pneumatic cylinders or any other system used in its place can exert their action independently on the plates or on any other system that connects all the convey belts in each group, such that when the respective plate or the system joining the convey belts of one group is raised, all the convey belts in that group rise simultaneously. Each plate can be raised using two cylinders. The cylinders may be located at the ends of the plates.

The transport system of Figure 2 may comprise a plurality of hollow-shaft geared motors wherein each hollow-shaft geared motor is configured to move the convey belts of a group. The transport system of Figure 2 may comprise a plurality of shafts wherein each shaft crosses all the convey belts in one specific group.

Each of the hollow-shaft geared motors turns the corresponding shaft of a group thereby moving the convey belts of that group. **In** this way, the movement of all the convey belts in one group is simultaneous and fully synchronised while at the same time the convey belts of one group can be moved independently to the convey belts of another group. This allows to transport different glass plates of the same of different size at the same time such that at a given time a glass plate is moved by the convey belts of a group or of a plurality of groups while another other glass plate is moved by the convey belts of a different group or plurality of groups. This allows that the movement of one glass plate can be independent of the movement of another glass plate wherein both glass places are on the surface of the table at the same time.

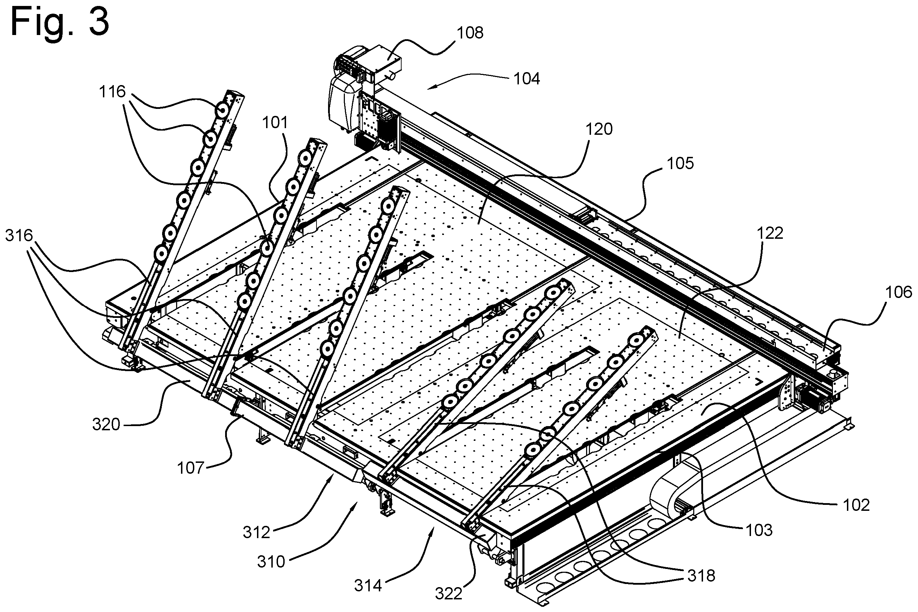

Figure 3 shows a schematic view of a glass processing table comprising an alternative loading system with arms and suction cups according to the invention.

The loading system (310) for loading glass plates comprises five tilting arms wherein the tilting arms are divided in two groups. The first group (312) comprises three tilting arms (316) and the second group comprises the other two tilting arms (318). Each of the first and the second group of tilting arms is able to independently receive a glass plate from outside the table and deposit the glass plate received in a horizontal position on the surface (102). That is, the tilting arms (316) of the first group (312) are configured to be able to move together but independently from the movement of the tilting arms (318) of the second group (314). In this way, the tilting arms (316) of the first group (312) tilt between a first position wherein the tilting arms (316) form an angle with the surface (102) and a second position wherein the tilting arms (316) extend parallel to the surface (102), wherein the movement of the tilting arms (316) can be independent of the movement of the tilting arms (318) of the second group (314). Similarly, the tilting arms (318) of the second group (314) tilt between a first position wherein the tilting arms (318) form an angle with the surface (102) and a second position wherein the tilting arms (318) extend parallel to the surface (102) wherein again said movement can be independent from the position on which the tilting arms (316) of the first group (312) are. However, the tilting arms (316) of the first group (312) and the tilting arms (318) of the second group (314) can also move in a synchronized manner. That is, the tilting arms (316) of the first group (312) and the tilting arms (318) of the second group (314) can move together between the first and the second position.

The loading system (310) of Figure 3 comprises a first bar or shaft (320) to which the tilting arms (316) of the first group (312) are secured and comprises a second bar or shaft (322) to which the tilting arms (318) of the second group (314) are secured. The tilting arms of each group can be secured to their corresponding bar or shaft by screws or any other means. The tilting arms (316) of the first group (312) are configured to carry out a tilting movement with respect to the first bar or shaft (320) such that the tilting arms are raised above said first bar or shaft (320). In the same way, the tilting arms (318) of the second group (314) are configured to carry out a tilting movement with respect to the second bar or shaft (322) such that the tilting arms are raised above said second bar or shaft (322). As explained with respect to the loading system (110) of Figure 1, the loading system (310) of Figure 3 may comprise also two hydraulic groups (not shown in Figure 1). One of the hydraulic groups can actuate the tilting arms (316) of the first group (312) to make them tilt while the other hydraulic group can actuate the tilting arms (318) of the second group (314) to make them tilt. The hydraulic groups may be located at one of the ends of the loading system (310). The loading system (310) of Figure 3 may comprises cylinders located at the ends of the tilting arms to exert a force on these and thereby raise them. Each of the tilting arms (316, 318) of the loading system (310) of Figure 3 comprises six suction cups (116) that will adhere to a glass plate and thereby hold it on the tilting arm (316, 318). Each of the tilting arms may alternatively comprise any number of suction cups. Moreover, the number of suction cups (116) may be different in each tilting arm (316, 318) and may be distributed in the tilting arm in any suitable way. The loading system (310) of Figure 3 may comprise two suction groups (not shown in Figure 1) connected to the suction cups (116). A first suction group may be connected to the suction cups (116) of the tilting arms (316) of the first group (320) such that creates a vacuum in said suction cups (116) when the tilting arms (316) are vertical so that they adhere to the surface of a glass plate and grip it. Once the tilting arms (316) of the first group (320) have finished loading a glass plate on the table and are in a horizontal position, the suction cups (116) of the tilting arms (316) can blow air to help said suction cups release from the surface of the glass plate. In the same way, a second suction group may be connected to the suction cups (116) of the tilting arms (318) of the second group (322) such that creates a vacuum in said suction cups (116) when the tilting arms (318) are vertical so that they adhere to the surface of a glass plate and grip it. Again, once the tilting arms (318) have finished loading a glass plate on the table and are in a horizontal position, the suction cups (116) of said tilting arms (318) can blow air to help said suction cups release from the surface of the glass plate.

The tilting arms (316, 318) may alternatively comprise any other system to load and hold the glass plate on the tilting arms.

The tilting arms (316, 318) of the loading system (310) of Figure 3 may comprise a support (not shown in Figure 3) as the one explained with reference to Figure 1B which can be used to hold a glass plate on the tilting arms when the tilting arms are in a position forming an angle with the surface (102) of the table. This allows to hold one glass plate on the tilting arms while another glass plate is being processed on the surface of the table. In this way, the loading and processing of glass plates can be partly overlapped thereby saving time.

Furthermore, in an alternative embodiment, the surface (102) of the table (100) in turn may comprise a first area (120) and a second area (122). The first area (120) may comprise a plurality of first reference positions (not shown). The second area (122) may comprise a plurality of second reference positions (not shown). The loading system (310) may be arranged to receive and place a plurality of glass plates on the surface based on the first reference positions and/or the second reference positions. For instance, The loading system (310) may be arranged to receive and place a first glass plate on the first area (120) using the tilting arms (316) of the first group (312) based on the first reference positions and/or to receive and place a second glass plate on the second area (122) based on the second reference positions. The table may comprise a processing unit and the first and the second reference positions may be programed in the processing unit. In this way, the loading system may identified the first and the second areas. The first area (520) and the second area (522) may be two independent processing areas such that two glasses can be processed at the same time. The upper bridge 106 of the table of Figure 3 may be fixed or movable (in the same way as described with respect to Figures 1A and 1B). The table of Figure 3 may comprise a second upper processing bridge mounted parallel to the upper bridge (106) which can moved backwards and/or forward in the first direction y on the table. Said second upper bridge may comprise a second processing head mounted in a similar way as the processing head (108) is mounted on the upper bridge (106) such that the movement of the second mobile processing head coordinated with the movement of the second upper bridge allow that the second processing head can reach the first and/or the second areas in order to process a glass plate located on the first and/or the second areas. The table may comprise a processing unit and the first and the second reference positions may be programed in the processing unit. In this way, the loading system may identify the first and the second areas.

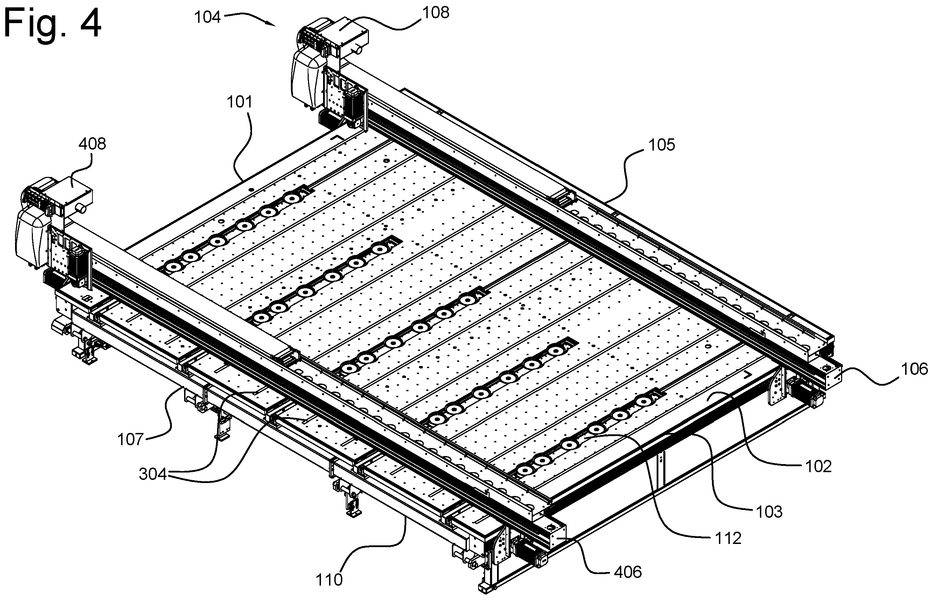

Figure 4 shows a schematic view of a table for loading and processing glass plates as the one shown in Figure 2 further comprising a second processing bridge. The glass processing table of Figure 4 comprises a processing system (104), a loading system (110) and a transport system as the ones described in relation to Figure 2. In Figure 2 the same reference signs have been used as in Figures 1A and 1B for identical elements.

Furthermore, the table for loading and processing glass plates shown in Figure 4 comprises a second upper bridge (406). The second upper bridge (406) is also arranged above the surface (102) and in parallel to the upper bridge (106). The second upper bridge (406) comprises also a mobile processing head (408) mounted on the second upper bridge (406). The mobile processing head (408) is configured to move along the second upper bridge (406).

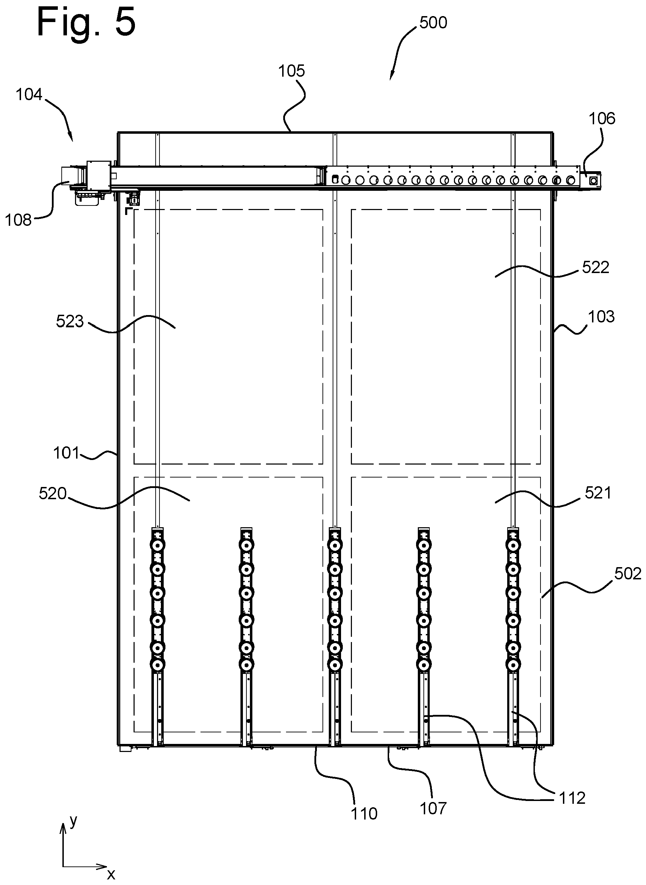

Figure 5, not according to the invention, shows a schematic view of a table (500) for loading and processing glass plates comprising the loading system of Figures 1B or Figure 3. The same reference numbers as in other Figures have been used to indicate identical items. The table (500) of Figure 5 comprises a surface (502) for holding glass plates in a horizontal position with respect to the surface (502). The surface (502) of the table (500) in turn comprises a first area (520) and a second area (521). The first area (520) may comprise a plurality of first reference positions and the second area (521) may also comprise a plurality of second reference positions as it has been described with respect to Figure 3. The loading system (110) may be arranged to receive and place a plurality of glass plates on the surface based on the first reference positions and/or the second reference positions also similar as in Figure 3. For instance, The loading system (110) may be arranged to receive and place a first glass plate on the first area (520) based on the first reference positions and/or a second glass plate on the second area (521) based on the second reference positions. The table may comprise a processing unit and the first and the second reference positions may be programed in the processing unit. In this way, the loading system may identified the first and the second areas. The first area (520) and the second area (521) may be two independent processing areas such that two glasses can be processed at the same time. The upper processing bridge can moved along the table such that the processing head can reach the first and the second areas. Alternatively, the table of Figure 5 may have a second upper processing bridge as the one shown in Figure 4 such that one of the processing heads of one of the upper processing bridges can process a first glass plate on the first area (520) while the other processing head of the other upper processing bridge can process a second glass plate on the second area (521). The table of Figure 5 may comprise any number of areas as also described in relation to Figure 3. The loading system of Figure 5 may be as the one described with respect to Figure 3 such that each group of arms are associated with one of the areas.

Alternatively, the first area (520) may be a buffer zone wherein a glass plate is loaded and waiting to be transferred to a third area (523). In this way, the third area (523) may be a processing zone. The processing zone may be defined by the area to which the processing head has access. The second area may be also a buffer zone wherein a glass plate is loaded and waiting to be transferred to a fourth area (522). In this way, the fourth area (522) may be a processing zone. The table of Figure 5 may comprise any number of processing areas and any number of buffering areas. The table surface may simultaneously fit as many plates as processing areas and buffer areas are defined on the table..

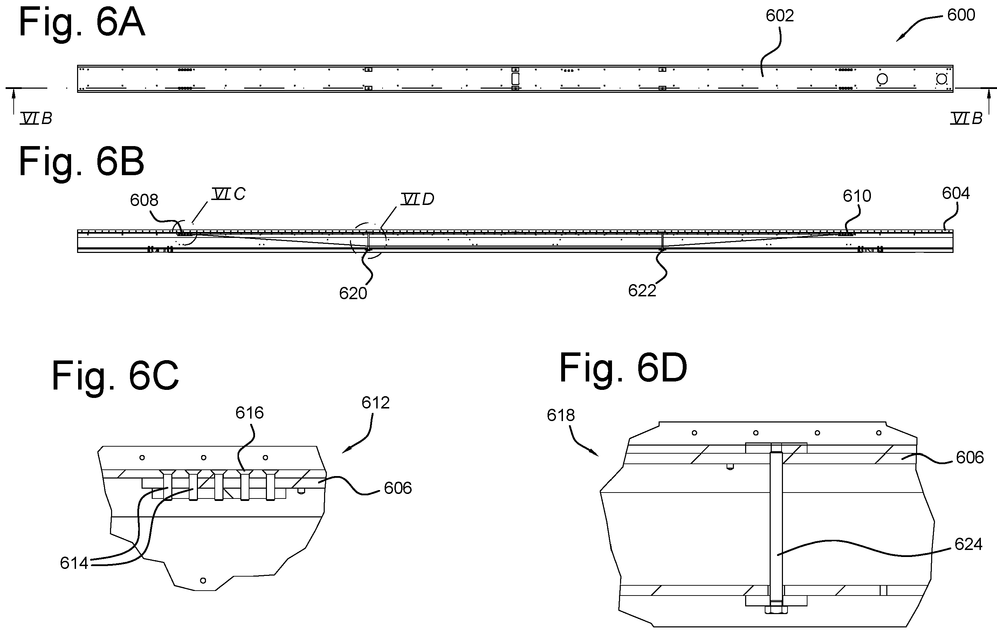

Figures 6A-D shows a schematic view of a bridge according to the invention. The bridge (600) of Figure 6A has a length of at least 4.5 meters. Figure 6A shows an upper view (602) of the bridge (600). Figure 6B shows a crossed section (604) of the bridge (600). The bridge (600) of Figures 6A-B is hollow and comprises a bracing system with a reinforcing structure (606). The reinforcing structure (606) is attached to the inside upper part of the bridge (600) at a first attachment point (608) and at a second attachment point (610). The structure of the first and the second attachment points is shown in (612) wherein the reinforcing structure (6060 is held by five attaching means (614) against the upper part of the bridge. The reinforcement structure (606) may be attached to the inside upper part of the bridge (600) by any suitable number of attaching means. The attaching means may be disposed in a row. The attaching means may be arranged in two parallel rows. However, the attaching means may be disposed in any other suitable way. The attaching means (614) may be screws. Alternatively, the attaching means may be any suitable means for holding the reinforcement structure against the upper part of the bridge.

Furthermore, the reinforcement structure (606) is attached to the upper part of the bridge at a third attachment point (620) and at a fourth attachment point (622). The structure of the third and the fourth attachment points is shown in (618) wherein the reinforcement structure (606) is held against the upper part of the bridge (600) by screw (624). The screw is arranged to tense the reinforcement structure (606) such that the force exercised on the reinforcement structure (606) causes the bridge (600) to raise in the center part thereby providing a stronger bridge capable of supporting a greater weight. The reinforcement structure may be attached to the bridge by any other suitable way instead of through the screw (624).

Finally, a method to process glass plates in a table as described in any of the previous Figures is provided. As previously described, the table comprises a first pair of opposed sides extending in a first direction, a second pair of opposed sides extending in a second direction orthogonal to the first direction, a surface for supporting a glass plate in horizontal position wherein the surface extends between the first and the second pair of opposed sides and a processing system for processing the glass plate, wherein the processing system comprises an upper bridge and a mobile processing head, where the mobile processing head is mounted on the upper bridge, wherein the upper bridge is arranged above the surface extending longitudinally in the second direction and wherein the mobile processing head is arranged to move along the upper bridge; wherein the second pair of opposed sides of the table extends a distance of more than 4.5 meters in the second direction; wherein the method comprises the steps of placing a glass plate having an edge longer than 4.5 meters with said edge extending in the first direction and processing, by the processing system, the glass plate.

## Claims

1. Table (100) for processing glass plates, wherein the table comprises:
a first pair of opposed sides extending in a first direction;
a second pair of opposed sides extending in a second direction orthogonal to the first direction;
a surface (102) for supporting a glass plate in horizontal position wherein the surface extends between the first and the second pair of opposed sides;
a processing system (104) for processing the glass plate, wherein the processing system (104) comprises an upper bridge (106) and a mobile processing head (108), where the mobile processing head (108) is mounted on the upper bridge (106), wherein the upper bridge (106) is arranged above the surface (102) extending longitudinally in the second direction and wherein the mobile processing head (108) is arranged to move along the upper bridge (106);
wherein the second pair of opposed sides of the table extends a distance of more than 4.5 meters in the second direction such that a glass plates having an edge longer than 4.5 meters enters the table in a position wherein said edge is parallel to the upper bridge and is placed for being processed on the table with said edge extending in the second direction.

2. The table for processing glass plates according to claim 1, wherein the upper bridge is a mobile bridge arranged to move on the table in the first direction.

3. The table for processing glass plates according to any of the preceding claims, wherein the table further comprises a loading system (110) arranged to receive the glass plate from outside the table (100) and to place the glass plate on the surface (102), wherein the loading system (110) is arranged at one of the sides of the second pair of sides and comprises at least one tilting arm (112) for loading the glass plate wherein the tilting arm (112) is arranged to tilt between a first position wherein the tilting arm forms an angle with the surface (102) and a second position wherein the tilting arm (112) extends along the surface (102) such that the loading system (110) can load and move the glass plate between the first and the second positions.

4. The table for processing glass plates according to claim 3 wherein the tilting arm (112) comprises a suction cup such that, when the tilting arm (112) is in the first position to receive the glass, the suction cup is arranged to adhere to the glass plate, and when the tiling arm (112) moves from the first position to the second position in which the tiling arm is in a horizontal position, the adhered suction cup pulls from the glass plate thereby moving and placing the glass plate horizontally on the surface (102) of the table.

5. The table for processing glass plates according to any of the preceding claims, wherein the table comprises a transport system for moving the glass plate forward and/or backwards on the table in the first direction between different positions on the surface (102) of the table (100,) wherein the transport system comprises a convey belt (304) or wheels arranged extending longitudinally in the first direction on the surface of the table and/or the transport system comprises a clamp, a suction cup or a block arranged on the upper bridge to pull or push the glass plate towards or away from the upper bridge.

6. The table for processing glass plates according to any of the preceding claims, wherein the table further comprises a fixed bridge arranged below the surface (102) of the table wherein the fixed bridge extends in the second direction and parallel to the upper bridge and comprises another mobile processing head configured to move along the fixed bridge.

7. The table for processing glass plates according to claims 3 and 4, wherein the tilting arm (112) comprises a support arranged to hold at least a section of the glass plate while the processing system processes another section of the glass plate or another glass plate.

8. The table for processing glass plates according to claim 3 wherein the loading system (110) comprises a device arranged to independently open or close at least one of the suction cups.

9. The table for processing glass plates according to claim 3, wherein the loading system (110) comprises a plurality of tilting arms (112) wherein the plurality of tilting arms (112) are arranged in a plurality of groups wherein the tilting arms that belong to a group of the plurality of groups are arranged to move in a synchronized way and independently of the tilting arms that belong to other group of the plurality of groups.

10. The table for processing glass plates according to any of the preceding claims, wherein the surface comprises a plurality of reference positions and the loading system is arranged to receive and place a plurality of glass plates on the surface based on the plurality of reference positions, respectively.

11. The table for processing glass plates according to any of the preceding claims, wherein the surface of the table further comprises a buffer zone such that one or more glass plates can be placed horizontally in the buffer zone waiting to be transferred to the processing zone wherein the processing zone is defined by the area of the table wherein the mobile processing head is arranged to move.

12. The table for processing glass plates according to any of the preceding claims, wherein the loading system further comprises a separating device arranged to separate the glass plate from a plurality of glass plates stored in an external glass plate storing device.

13. The table for processing glass plates according to any of the preceding claims, wherein the table comprises a communication system arrange to send and/or receive control signals to and/or from other systems in the table and/or outside the table.

14. The table for processing glass plates according to any of the preceding claims, wherein the bridge comprises a reinforcement structure to avoid structural deformation wherein the reinforcement structure comprises a bracing cable system or reinforcement pieces.

15. A method to process glass plates in a table,
wherein the table comprises a first pair of opposed sides extending in a first direction, a second pair of opposed sides extending in a second direction orthogonal to the first direction, a surface (102) for supporting a glass plate in horizontal position wherein the surface extends between the first and the second pair of opposed sides and a processing system (104) for processing the glass plate, wherein the processing system (104) comprises an upper bridge (106) and a mobile processing head (108), where the mobile processing head (108) is mounted on the upper bridge (106), wherein the upper bridge (106) is arranged above the surface (102) extending longitudinally in the second direction and wherein the mobile processing head (108) is arranged to move along the upper bridge (106); wherein the second pair of opposed sides of the table extends a distance of more than 4.5 meters in the second direction;
wherein the method comprises:
placing a glass plate having an edge longer than 4.5 meters with said edge extending in the second direction and processing, by the processing system, the glass plate wherein the glass plate enters the table with said edge parallel to the upper bridge.

## Patentansprüche

1. Tisch (100) zum Behandeln von Glasplatten, wobei der Tisch Folgendes aufweist:
ein erstes Paar an entgegengesetzten Seiten, die sich in einer ersten Richtung erstrecken;
ein zweites Paar an entgegengesetzten Seiten, die sich in einer zweiten Richtung erstrecken, die senkrecht zu der ersten Richtung ist;
eine Oberfläche (102) zum Abstützen einer Glasplatte in einer horizontalen Position, wobei die Oberfläche sich zwischen dem ersten und dem zweiten Paar an entgegengesetzten Seiten erstreckt;
ein Behandlungssystem (104) zum Behandeln der Glasplatte, wobei das Behandlungssystem (104) eine obere Brücke (106) und einen beweglichen Behandlungskopf (108) aufweist, wobei der bewegliche Behandlungskopf (108) an der oberen Brücke (106) montiert ist, wobei die obere Brücke (106) über der Oberfläche (102) so angeordnet ist, dass sie sich länglich in der zweiten Richtung erstreckt, und wobei der bewegliche Behandlungskopf (108) so angeordnet ist, dass er sich entlang der oberen Brücke (106) bewegt;
wobei das zweite Paar an entgegengesetzten Seiten des Tisches sich in einem Abstand von mehr als 4,5 Meter in der zweiten Richtung so erstreckt, dass eine Glasplatte mit einem Rand, der länger als 4,5 Meter ist, zum Tisch in einer Position gelangt, bei dem der Rand parallel zu der oberen Brücke ist, und zum Zweck einer Behandlung auf dem Tisch angeordnet wird, indem der Rand sich in der zweiten Richtung erstreckt.

2. Tisch zum Behandeln von Glasplatten gemäß Anspruch 1, wobei die obere Brücke eine bewegliche Brücke ist, die so angeordnet ist, dass sie sich an dem Tisch in der ersten Richtung bewegt.

3. Tisch zum Behandeln von Glasplatten gemäß einem der vorherigen Ansprüche, wobei der Tisch des Weiteren ein Beladesystem (110) aufweist, das so eingerichtet ist, dass es die Glasplatte von einer Außenseite des Tisches (100) empfängt und die Glasplatte auf der Oberfläche (102) anordnet, wobei das Beladesystem (110) an einer der Seiten des zweiten Paares an Seiten angeordnet ist und zumindest einen Neigearm (112) aufweist zum Laden der Glasplatte, wobei der Neigearm (112) so angeordnet ist, dass er zwischen einer ersten Position, bei der der Neigearm einen Winkel zu der Oberfläche (102) ausbildet, und einer zweiten Position geneigt wird, bei der der Neigearm (112) sich entlang der Oberfläche (102) so erstreckt, dass das Beladesystem (110) die Glasplatte zwischen der ersten und der zweiten Position laden und bewegen kann.

4. Tisch zum Behandeln von Glasplatten gemäß Anspruch 3, wobei der Neigearm (112) einen Saugbecher derart aufweist, dass, wenn der Neigearm (112) in der ersten Position ist, um die Glasplatte zu empfangen, der Saugbecher so angeordnet ist, dass er an der Glasplatte anhaftet, und wenn der Neigearm (112) sich von der ersten Position zu der zweiten Position, bei der der Neigearm in einer horizontalen Position ist, bewegt, der angeheftete Saugbecher von der Glasplatte gezogen wird, wodurch die Glasplatte horizontal auf der Oberfläche (102) des Tisches bewegt und angeordnet wird.

5. Tisch zum Behandeln von Glasplatten gemäß einem der vorherigen Ansprüche, wobei der Tisch ein Transportsystem aufweist zum Bewegen der Glasplatte nach vorn und/oder zurück auf dem Tisch in der ersten Richtung zwischen verschiedenen Positionen auf der Oberfläche (102) des Tisches (100), wobei das Transportsystem einen Beförderungsriemen (304) oder Räder aufweist, die so angeordnet sind, dass sie sich in Längsrichtung in der ersten Richtung auf der Oberfläche des Tisches erstrecken, und/oder das Transportsystem eine Klemme, einen Saugbecher oder einen Block aufweist, der auf der oberen Brücke angeordnet ist, um die Glasplatte zu der oberen Brücke hin oder von der oberen Brücke weg zu ziehen oder zu drücken.

6. Tisch zum Behandeln von Glasplatten gemäß einem der vorherigen Ansprüche, wobei der Tisch des Weiteren eine fixierte Brücke aufweist, die unter der Oberfläche (102) des Tisches angeordnet ist, wobei die fixierte Brücke sich in der zweiten Richtung und parallel zu der oberen Brücke erstreckt und einen anderen beweglichen Behandlungskopf aufweist, der so aufgebaut ist, dass er sich entlang der fixierten Brücke bewegt.

7. Tisch zum Behandeln von Glasplatten gemäß Anspruch 3 oder 4, wobei der Neigearm (112) eine Abstützung aufweist, die so angeordnet ist, dass sie zumindest einen Abschnitt der Glasplatte hält, während das Behandlungssystem einen anderen Abschnitt der Glasplatte oder eine andere Glasplatte behandelt.

8. Tisch zum Behandeln von Glasplatten gemäß Anspruch 3, wobei das Beladesystem (110) eine Vorrichtung aufweist, die so angeordnet ist, dass sie zumindest einen der Saugbecher unabhängig öffnet oder schließt.

9. Tisch zum Behandeln von Glasplatten gemäß Anspruch 3, wobei das Beladesystem (110) eine Vielzahl an Neigearmen (112) aufweist, wobei die in Vielzahl vorgesehenen Neigearme (112) in einer Vielzahl an Gruppen angeordnet sind, wobei die Neigearme, die zu einer Gruppe der Vielzahl an Gruppen gehören, so angeordnet sind, dass sie sich in einer synchronisierten Weise und unabhängig von den Neigearmen bewegen, die zu einer anderen Gruppe der Vielzahl an Gruppen gehören.

10. Tisch zum Behandeln von Glasplatten gemäß einem der vorherigen Ansprüche, wobei die Oberfläche eine Vielzahl an Referenzpositionen aufweist, und das Beladesystem so angeordnet ist, dass es eine Vielzahl an Glasplatten auf der Oberfläche auf der Basis der Vielzahl an Referenzpositionen jeweils empfängt und anordnet.

11. Tisch zum Behandeln von Glasplatten gemäß einem der vorherigen Ansprüche, wobei die Oberfläche des Tisches des Weiteren eine Pufferzone derart aufweist, dass eine oder mehrere Glasplatten horizontal in der Pufferzone so angeordnet werden können, dass sie darauf warten, zu der Behandlungszone transportiert zu werden, wobei die Behandlungszone durch den Bereich des Tisches definiert ist, in dem der bewegliche Behandlungskopf so angeordnet ist, dass er sich bewegt.

12. Tisch zum Behandeln von Glasplatten gemäß einem der vorherigen Ansprüche, wobei das Beladesystem des Weiteren eine Separiervorrichtung aufweist, die so angeordnet ist, dass sie die Glasplatte von einer Vielzahl an Glasplatten, die in einer externen Glasplattenunterbringvorrichtung untergebracht sind, separiert.

13. Tisch zum Behandeln von Glasplatten gemäß einem der vorherigen Ansprüche, wobei der Tisch ein Kommunikationssystem aufweist, das so eingerichtet ist, dass es Steuersignale zu und/oder von anderen Systemen in dem Tisch und/oder außerhalb des Tisches sendet und/oder empfängt.

14. Tisch zum Behandeln von Glasplatten gemäß einem der vorherigen Ansprüche, wobei die Brücke einer Verstärkungsstruktur aufweist, um eine strukturelle Verformung zu vermeiden, wobei die Verstärkungsstruktur ein Verstärkungskabelsystem oder Verstärkungsstücke aufweist.

15. Verfahren zum Behandeln von Glasplatten in einem Tisch,
wobei der Tisch Folgendes aufweist: ein erstes Paar an entgegengesetzten Seiten, die sich in einer ersten Richtung erstrecken, ein zweites Paar an entgegengesetzten Seiten, die sich in einer zweiten Richtung erstrecken, die senkrecht zu der ersten Richtung ist, eine Oberfläche (102) zum Abstützen einer Glasplatte in einer horizontalen Position, wobei die Oberfläche sich zwischen dem ersten und zweiten Paar an entgegengesetzten Seiten erstreckt, und ein Behandlungssystem (104) zum Behandeln der Glasplatte,
wobei das Behandlungssystem (104) eine obere Brücke (106) und einen beweglichen Behandlungskopf (108) aufweist, wobei der bewegliche Behandlungskopf (108) an der oberen Brücke (106) montiert ist, wobei die obere Brücke (106) über der Oberfläche (102), die sich in Längsrichtung in der zweiten Richtung erstreckt, angeordnet ist, und wobei der bewegliche Behandlungskopf (108) so angeordnet ist, dass er sich entlang der oberen Brücke (106) bewegt;
wobei das zweite Paar an entgegengesetzten Seiten des Tisches sich bei einem Abstand von mehr als 4,5 Meter in der zweiten Richtung erstreckt;
wobei das Verfahren folgende Schritte aufweist:
Anordnen einer Glasplatte mit einem Rand, der länger als 4,5 Meter ist, wobei der Rand sich in der zweiten Richtung erstreckt, und durch das Behandlungssystem erfolgendes Behandeln der Glasplatte, wobei die Glasplatte zum Tisch gelangt, indem der Rand parallel zu der oberen Brücke ist.

## Revendications

1. - Table (100) pour le traitement de plaques de verre, la table comprenant :
une première paire de côtés opposés s'étendant dans une première direction ;
une seconde paire de côtés opposés s'étendant dans une seconde direction orthogonale à la première direction ;
une surface (102) pour supporter une plaque de verre dans une position horizontale, la surface s'étendant entre les première et seconde paires de côtés opposés ;
un système de traitement (104) pour traiter la plaque de verre, le système de traitement (104) comprenant un pont supérieur (106) et une tête de traitement mobile (108), la tête de traitement mobile (108) étant montée sur le pont supérieur (106), le pont supérieur (106) étant disposé au-dessus de la surface (102) s'étendant longitudinalement dans la seconde direction et la tête de traitement mobile (108) étant disposée pour se déplacer le long du pont supérieur (106) ;
la seconde paire de côtés opposés de la table s'étendant sur une distance de plus de 4,5 mètres dans la seconde direction, de telle sorte qu'une plaque de verre ayant un bord de plus de 4,5 mètres de long entre dans la table dans une position dans laquelle ledit bord est parallèle au pont supérieur et est placée pour être traitée sur la table avec ledit bord s'étendant dans la seconde direction.

2. - Table pour le traitement de plaques de verre selon la revendication 1, dans laquelle le pont supérieur est un pont mobile disposé pour se déplacer sur la table dans la première direction.

3. - Table pour le traitement de plaques de verre selon l'une quelconque des revendications précédentes, la table comprenant en outre un système de chargement (110) disposé pour recevoir la plaque de verre depuis l'extérieur de la table (100) et pour placer la plaque de verre sur la surface (102), le système de chargement (110) étant disposé à l'un des côtés de la seconde paire de côtés et comprenant au moins un bras basculant (112) pour charger la plaque de verre, le bras basculant (112) étant disposé pour basculer entre une première position dans laquelle le bras basculant forme un angle avec la surface (102) et une seconde position dans laquelle le bras basculant (112) s'étend le long de la surface (102) de telle sorte que le système de chargement (110) peut charger et déplacer la plaque de verre entre les première et seconde positions.

4. - Table pour le traitement de plaques de verre selon la revendication 3 dans laquelle le bras basculant (112) comprend une ventouse de telle sorte que, lorsque le bras basculant (112) est dans la première position pour recevoir le verre, la ventouse est disposée pour adhérer à la plaque de verre, et lorsque le bras basculant (112) se déplace de la première position à la seconde position dans laquelle le bras basculant est dans une position horizontale, la ventouse adhérée se retire de la plaque de verre, déplaçant et plaçant ainsi la plaque de verre horizontalement sur la surface (102) de la table.

5. - Table pour le traitement de plaques de verre selon l'une quelconque des revendications précédentes, la table comprenant un système de transport pour déplacer la plaque de verre en avant et/ou en arrière sur la table dans la première direction entre différentes positions sur la surface (102) de la table (100), le système de transport comprenant une courroie transporteuse (304) ou des roues disposées en s'étendant longitudinalement dans la première direction sur la surface de la table et/ou le système de transport comprenant une pince, une ventouse ou un bloc disposé sur le pont supérieur pour rapprocher ou éloigner la plaque de verre du pont supérieur.

6. - Table pour le traitement de plaques de verre selon l'une quelconque des revendications précédentes, la table comprenant en outre un pont fixe disposé au-dessous de la surface (102) de la table, le pont fixe s'étendant dans la seconde direction et parallèlement au pont supérieur et comprenant une autre tête de traitement mobile configurée pour se déplacer le long du pont fixe.

7. - Table pour le traitement de plaques de verre selon les revendications 3 et 4, dans laquelle le bras basculant (112) comprend un support disposé pour maintenir au moins une section de la plaque de verre tandis que le système de traitement traite une autre section de la plaque de verre ou une autre plaque de verre.

8. - Table pour le traitement de plaques de verre selon la revendication 3, dans laquelle le système de chargement (110) comprend un dispositif disposé pour ouvrir ou fermer indépendamment au moins une des ventouses.

9. - Table pour le traitement de plaques de verre selon la revendication 3, dans laquelle le système de chargement (110) comprend une pluralité de bras basculants (112), la pluralité de bras basculants (112) étant disposés en une pluralité de groupes, les bras basculants qui appartiennent à un groupe de la pluralité de groupes étant disposés pour se déplacer de manière synchronisée et indépendamment des bras basculants qui appartiennent à un autre groupe de la pluralité de groupes.

10. - Table pour le traitement de plaques de verre selon l'une quelconque des revendications précédentes, dans laquelle la surface comprend une pluralité de positions de référence et le système de chargement est disposé pour recevoir et placer une pluralité de plaques de verre sur la surface sur la base de la pluralité de positions de référence, respectivement.

11. - Table pour le traitement de plaques de verre selon l'une quelconque des revendications précédentes, dans laquelle la surface de la table comprend en outre une zone tampon de telle sorte qu'une ou plusieurs plaques de verre peuvent être placées horizontalement dans la zone tampon en attendant d'être transférées dans la zone de traitement, la zone de traitement étant définie par la zone de la table dans laquelle la tête de traitement mobile est disposée pour se déplacer.

12. - Table pour le traitement de plaques de verre selon l'une quelconque des revendications précédentes, dans laquelle le système de chargement comprend en outre un dispositif de séparation disposé pour séparer la plaque de verre d'une pluralité de plaques de verre stockées dans un dispositif externe de stockage de plaques de verre.

13. - Table pour le traitement de plaques de verre selon l'une quelconque des revendications précédentes, la table comprenant un système de communication disposé pour envoyer et/ou recevoir des signaux de commande vers et/ou depuis d'autres systèmes dans la table et/ou à l'extérieur de la table.

14. - Table pour le traitement de plaques de verre selon l'une quelconque des revendications précédentes, dans laquelle le pont comprend une structure de renforcement pour éviter une déformation structurelle, la structure de renforcement comprenant un système de câbles de renfort ou des pièces de renforcement.

15. - Procédé pour traiter des plaques de verre dans une table,
la table comprenant une première paire de côtés opposés s'étendant dans une première direction, une seconde paire de côtés opposés s'étendant dans une seconde direction orthogonale à la première direction, une surface (102) pour supporter une plaque de verre dans une position horizontale, la surface s'étendant entre les première et seconde paires de côtés opposés, et un système de traitement (104) pour traiter la plaque de verre, le système de traitement (104) comprenant un pont supérieur (106) et une tête de traitement mobile (108), la tête de traitement mobile (108) étant montée sur le pont supérieur (106), le pont supérieur (106) étant disposé au-dessus de la surface (102) s'étendant longitudinalement dans la seconde direction, et la tête de traitement mobile (108) étant disposée pour se déplacer le long du pont supérieur (106) ; la seconde paire de côtés opposés de la table s'étendant sur une distance de plus de 4,5 mètres dans la seconde direction ;
le procédé comprenant :
placer une plaque de verre ayant un bord d'une longueur supérieure à 4,5 mètres, ledit bord s'étendant dans la seconde direction, et traiter, par le système de traitement, la plaque de verre, la plaque de verre entrant dans la table avec ledit bord parallèle au pont supérieur.
